# EUROPEAN PATENT APPLICATION

(11) **EP 4 309 957 A1**
(43) Date of publication of application: **24.01.2024**
(21) Application number: 23185480.3
(22) Date of filing: 14.07.2023
(51) Int. Cl.: B60R 7/04

(54) **SUPPORT STRUCTURES**

(30) Priority: 20.07.2022 US 202263390813 P
(71) Applicant: Apple Inc., Cupertino, CA 95014 (US)
(72) Inventor: VALLURU, Pranay Kumar Reddy, Cupertino, 95014 (US); STORM, Trent, Cupertino, 95014 (US); HORNUNG, Lukas, Cupertino, 95014 (US); DOMPER, Arturo Llamazares, Cupertino, 95014 (US); WOODS, Matthew I., Cupertino, 95014 (US)
(74) Representative: Zacco Denmark A/S

(57) **Abstract**

A support assembly includes a bracket coupled to a structural portion. The bracket is configured to prevent relative motion between the end portion and the bracket when a first load is applied in a first direction, and the bracket is configured to allow relative motion between the end portion and the bracket when a second load is applied in a second direction that is different than the first direction. In some implementations, relative motion may be allowed when the second load exceeds a threshold value.

## Description

### CROSS-REFERENCE TO RELATED APPLICATIONS

This application claims the benefit of United States Provisional Application No. 63/390,813, filed on July 20, 2022, the contents of which are hereby incorporated by reference in its entirety for all purposes.

### FIELD

The present disclosure relates generally to the field of support structures.

### BACKGROUND

A support structure may be provided in some structures. As an example, the support structure may be configured to be grasped by a user.

### SUMMARY

One aspect of the disclosure is a support assembly for a vehicle that includes a bracket coupled to a structural portion of the vehicle and defining a channel. A hand rail includes an end portion configured to interface with the channel. The bracket is configured to prevent relative motion between the end portion and the bracket when a first load is applied to the hand rail in a first direction, and the bracket is configured to allow relative motion between the end portion and the bracket when a second load is applied to the hand rail in a second direction that is different than the first direction.

Another aspect of the disclosure is a support assembly for a vehicle that includes a bracket coupled to a structural portion of the vehicle and defining a channel. A flange is at least partially positioned in the channel and is configured to move along the channel. A hand rail includes an end portion that is coupled to the flange and is configured to move with the flange as the flange moves along the channel. The bracket is configured to prevent the flange from moving in a first direction when a first load is applied to the hand rail in the first direction, and the bracket is configured to allow the flange to move in a second direction that is different than the first direction when a second load is applied to the hand rail in the second direction and the second load is greater than a threshold value.

Yet another aspect of the disclosure is a support assembly for a vehicle that includes a bracket coupled to a structural portion of the vehicle and defining a first geometric feature. A hand rail includes an outer surface that defines a second geometric feature that is complementary to the first geometric feature. The second geometric feature is configured to prevent the hand rail from moving in a first direction when the second geometric feature is engaged with the first geometric feature and a first load is applied to the hand rail in the first direction. The second geometric feature is configured to allow the hand rail to move in a second direction that is different than the first direction when a second load is applied to the hand rail in the second direction. The second geometric feature is configured to disengage from the first geometric feature during application of the second load to the hand rail in the second direction.

Exemplary support structures are set out in the following embodiments:
1. A support assembly for a vehicle, comprising:
   a bracket coupled to a structural portion of the vehicle and defining a channel; and
   a hand rail including an end portion configured to interface with the channel,
   wherein the bracket is configured to prevent relative motion between the end portion of the hand rail and the bracket when a first load is applied to the hand rail in a first direction, and the bracket is configured to allow relative motion between the end portion of the hand rail and the bracket when a second load is applied to the hand rail in a second direction that is different than the first direction.
2. The support assembly of embodiment 1, wherein the second direction is oblique to the first direction.
3. The support assembly of any of embodiments 1 or 2, wherein the first direction is oriented obliquely to a direction of travel of the vehicle.
4. The support assembly of any of embodiments 1-3, wherein the bracket is configured to allow the end portion to move between approximately ten millimeters and approximately twenty millimeters in the second direction when the second load is applied to the hand rail in the second direction.
5. The support assembly of any of embodiments 1-4, wherein the bracket is fixed to the structural portion and the end portion is configured to move relative to the bracket.
6. The support assembly of any of embodiments 1-5, wherein the end portion is fixed to the bracket and the bracket is configured to move relative to the structural portion.
7. The support assembly of any of embodiments 1-6, wherein a flange is at least partially positioned in the channel and is configured to move along the channel,
   wherein the end portion is coupled to the flange and is configured to move with the flange as the flange moves along the channel.
8. The support assembly of embodiment 7, wherein the bracket is configured to prevent the flange from moving in the first direction when the first load is applied to the hand rail in the first direction, and the bracket is configured to allow the flange to move in the second direction that when the second load is applied to the hand rail in the second direction.
9. The support assembly of embodiment 8, wherein the second load is greater than a threshold value.
10. The support assembly of embodiment 9, wherein the bracket includes a deformable portion configured to resist motion of the flange in the second direction when the second load is less than the threshold value and allow motion of the flange in the second direction when the second load is greater than the threshold value.
11. The support assembly of embodiment 10, wherein the deformable portion is configured to break when the second load is greater than the threshold value to allow motion of the flange in the second direction.
12. The support assembly of embodiment 7, or any of embodiments 7-11, wherein the flange includes a first portion positioned within the channel and a second portion coupled to the first portion, wherein the second portion is coupled to the hand rail and extends away from the channel.
13. The support assembly of embodiment 12, wherein the first portion is oriented obliquely to the second portion.
14. The support assembly of embodiment 7 or any of embodiments 7-13, wherein the channel extends through the bracket and the flange is secured within the channel on a first side by the hand rail and on a second side by a head portion of a threaded coupler that connects the hand rail to the flange.
15. The support assembly of embodiment 14, wherein the head portion extends beyond a boundary of the channel and the hand rail extends beyond the boundary of the channel.

### BRIEF DESCRIPTION OF THE DRAWINGS

FIG. 1 is an illustration of a support assembly for a vehicle.
FIGS. 2-3 are illustrations of cross-sections of a bracket of the vehicle of FIG. 1.
FIGS. 4-5 are illustrations of cross-sections of a bracket of the vehicle of FIG. 1.
FIG. 6 is an illustration of a bracket of the vehicle of FIG. 1.

### DETAILED DESCRIPTION

The disclosure herein relates to a hand rail of a vehicle. In some instances, a hand rail is included in a vehicle and is configured to be grasped by an occupant for support when entering or exiting the vehicle, or when moving within the vehicle. When not being used to support an occupant, the hand rail may be inadvertently contacted by an occupant (e.g., if the vehicle contacts an object, changes directions, and/or accelerates or decelerates).

Embodiments disclosed herein are directed to a hand rail that is configured to move relative to the vehicle when contacted inadvertently by an occupant. In some implementations, the hand rail is coupled to a channel defined by a bracket that is connected to a structural portion of the vehicle. The bracket is configured to prevent relative motion between the hand rail and the bracket when the hand rail is grasped by an occupant. The bracket is also configured to allow relative motion between the hand rail and the bracket when the hand rail is otherwise contacted by an occupant.

In an example implementation, the hand rail is coupled to a flange that is movably connected to the bracket. The bracket is configured to prevent relative motion between the flange and the bracket when the hand rail is grasped by an occupant. The bracket is configured to allow relative motion between the flange and the bracket when the hand rail is otherwise contacted by an occupant.

In another example implementation, the bracket includes a first geometric feature that is configured to engage a second geometric feature defined by the hand rail. The bracket is configured to prevent relative motion between the hand rail and the bracket when the first geometric feature is engaged with the second geometric feature. The bracket is configured to allow relative motion between the hand rail and the bracket when the when the first geometric feature is disengaged from the second geometric feature.

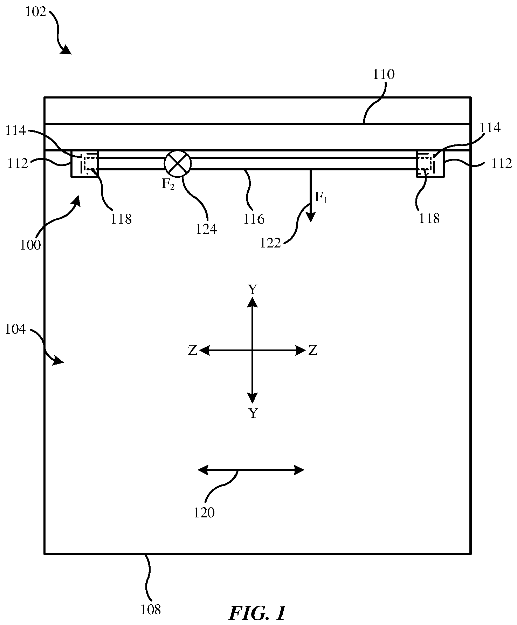

FIG. 1 is an illustration of a support assembly 100 for a vehicle 102. In some implementations, the vehicle 102 can be any type of vehicle including, but not limited to, gas or diesel-powered vehicles, electric vehicles, boats or other marine vehicles, aircraft (e.g., airplanes, helicopters, etc.), remote-controlled vehicles, etc. The vehicle 102 is shown to include a cabin 104 that is configured to hold one or more occupants. In some implementations, the cabin 104 may be a vehicle cabin that may include components such as seats, consoles, etc.

The vehicle 102 also includes a structural portion 110 that is shown extending across the cabin 104. The structural portion 110 may be, for example, a beam that extends longitudinally along the length of the vehicle 102, as shown in FIG. 1. The structural portion 110 may also be, for example, a beam that extends across a width of the vehicle 102 (e.g., in a lateral direction). The structural portion 110 may be configured to provide longitudinal and/or lateral support for the vehicle 102 based on the orientation of the structural portion 110. Furthermore, the structural portion 110 may be shaped to conform to a shape of the vehicle 102. For example, a roof structure of the vehicle 102 may have an arcuate shape, and the structural portion 110 may be shaped to conform to the arcuate shape while providing support for the vehicle 102.

The support assembly 100 includes a bracket 112 coupled to the structural portion 110 of the vehicle 102 and defining a channel 114 that is configured to interface with a hand rail 116. For example, the channel 114 may be sized to receive a portion of the hand rail 116, and the hand rail 116 may fit into the channel 114 and be secured to the bracket 112 via a mechanical coupler (e.g., a threaded coupler, a rivet, etc.). The hand rail 116 may also be secured to the bracket 112 via welding, brazing, soldering, or any other heat-based joining process. As shown, there are two brackets 112 coupled to the structural portion 110, and each of the brackets 112 is configured to interface with the hand rail 116 via a corresponding channel 114. In some embodiments, there may be more or fewer brackets 112 configured to interface with the hand rail 116.

The hand rail 116 extends between the brackets 112 and is configured to provide support to an occupant when entering and/or exiting the vehicle 102. As shown, the hand rail 116 includes an end portion 118 configured to interface with the channel 114 such that the brackets 112 support the hand rail 116. As shown, the hand rail 116 includes two end portions 118 that are configured to interface with the respective brackets 112. In various arrangements, the number of end portions 118 is the same as the number of brackets 112 such that each end portion 118 interfaces with a corresponding bracket 112. Arranged as described, the bracket 112 supports the hand rail 116 and the loads applied to the hand rail 116 by one or more occupants entering and/or exiting the vehicle 102.

The bracket 112 is configured to prevent relative motion between the end portion 118 and the bracket 112 when a first load F₁ is applied to the hand rail 116 in a first direction 122, . For example, when entering and/or exiting the vehicle 102, the first load F₁ may be applied to the hand rail 116 by an occupant grasping the hand rail 116 for support. In some implementations, the first load F₁ may be applied in the first direction 122 and may be oriented obliquely (e.g., at a non-zero angle) relative to a direction of travel 120 of the vehicle 102. In various embodiments, a non-zero portion of the first load F₁ applied to the hand rail 116 by the occupant may be applied in the first direction 122 (e.g., in the negative y-direction). More specifically, even if some of the first load F₁ is oriented in other directions (e.g., in the z-direction, the x-direction, or a combination thereof), a non-zero portion of the first load F₁ may be applied in the first direction 122. In such cases, the bracket 112 prevents relative motion between the end portion 118 and the bracket 112 in the first direction 122 so the hand rail 116 does not move when the occupant needs to use the hand rail 116 for support.

In contrast, the bracket 112 is configured to allow relative motion between the end portion 118 and the bracket 112 when a second load F₂ is applied to the hand rail 116 in a second direction 124 that is different than the first direction 122. For example, when an occupant otherwise contacts the hand rail 116 (e.g., based on a sudden movement of the vehicle 102), the load F₂ applied to the hand rail 116 by the contact (e.g., a second load) may be applied to the hand rail 116 in the second direction 124 that is oblique relative to the first direction 122. More specifically, if the vehicle 102 changes directions, stops, accelerates, etc., the occupant may contact the hand rail 116 where a non-zero portion of the second load F₂ is directed in the second direction 124 (e.g., the x-direction, such as into the page of FIG. 1). In such instances, it is desirable for the hand rail 116 and/or the bracket 112 to absorb at least some of the load imparted to the hand rail 116 by the occupant. In such instances, the bracket 112 may be configured to allow relative motion between the end portion 118 and the bracket 112 in the second direction 124 so the hand rail 116 absorbs at least some of the second load F₂ imparted to the hand rail 116 by the occupant. In some implementations, to absorb at least some of the second load F₂, the bracket 112 is configured to allow the end portion 118 to move between approximately ten millimeters (for example, between eight millimeters and twelve millimeters) and approximately twenty millimeters (for example, between sixteen millimeters and twenty-four millimeters) in the second direction 124when the second load F₂ is applied to the hand rail 116 in the second direction 124.

Relative motion between the end portion 118 and the bracket 112 may occur in various configurations. For example, the bracket 112 may be fixed to the structural portion 110 and the end portion 118 may be configured to move relative to the bracket 112. As another example, the end portion 118 may be fixed to the bracket 112 and the bracket 112 may be configured to move relative to the structural portion 110. In another implementation, the support assembly 100 may be configured to allow relative motion between the bracket 112 and the structural portion 110 and between the end portion 118 and the bracket 112.

In some implementations, the relative motion may occur within the hand rail 116 in addition to or instead of between the hand rail 116 and the bracket 112. For example, the hand rail 116 may include multiple rail portions that are nested within each other and are configured to move relative to each other. Upon impact between an object and the hand rail 116, the nested rail portions may move relative to each other such that the hand rail 116 moves to absorb at least part of the impact.

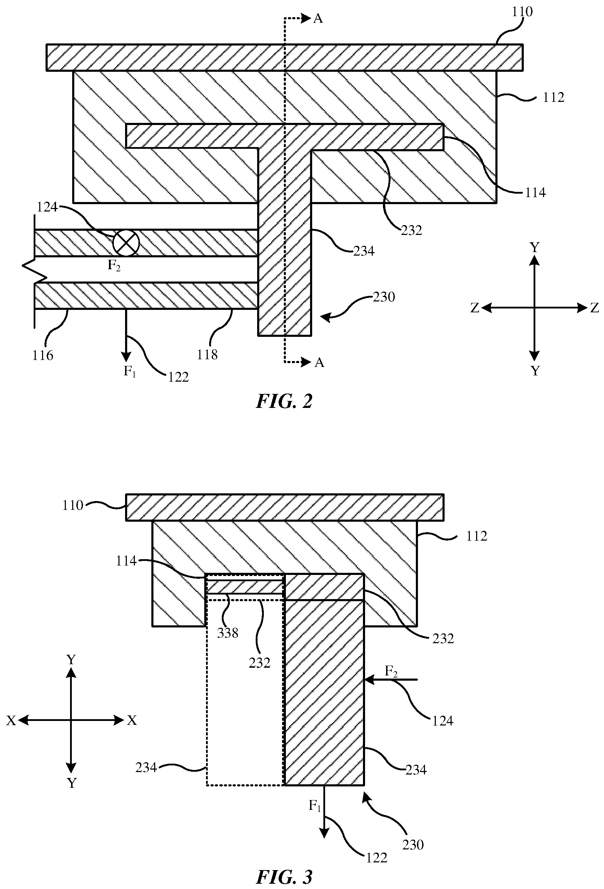

Loads applied to the hand rail 116 may also be imparted obliquely along the x-, y-, and/or z-axes (the x-, y-, and z-directions are mutually orthogonal directions of an arbitrary coordinate system and should not be associated with directions such as horizontal, vertical, or other frames of reference). For example, a load applied to the hand rail 116 may include vector components directed along the x-axis, the y-axis, and the z-axis. As described above, the support assembly 100 is configured to prevent relative motion between the bracket 112 and the hand rail 116 in the y-direction in response to the vector component of the load directed in the y-direction. Furthermore, the bracket 112 is configured to prevent relative motion between the bracket 112 and the hand rail 116 in the z-direction in response to the vector component of the load directed in the z-direction. In addition, the support assembly 100 is configured to permit relative motion between the bracket 112 and the hand rail 116 in the x-direction in response to the vector component of the load directed in the x-direction. In some implementations, the hand rail 116 is configured to move relative to the bracket 112 when the vector component of the load in the x-direction is greater than zero. However, the hand rail 116 may also be configured to move relative to the bracket 112 only when the vector component of the load in the x-direction is greater than a threshold value. Such implementations are further described with reference to FIGS. 2-6.

FIGS. 2-3 are illustrations of cross-sections of the bracket 112 of the vehicle 102 of FIG. 1, where FIG. 3 shows a cross-section of the bracket 112 along A-A shown in FIG. 2. As shown, the bracket 112 is coupled to the structural portion 110 of the vehicle 102 and defines a channel 114. In some implementations, the channel 114 extends along a length of the bracket 112 in the x-direction, and the bracket 112 is enclosed at both ends such that the channel 114 is enclosed by the bracket 112.

A flange 230 is at least partially positioned in the channel 114 and is configured to move along the channel 114 (e.g., in the x-direction). The end portion 118 of the hand rail 116 is coupled to the flange 230 and is configured to move with the flange 230 as the flange 230 moves along the channel 114. The end portion 118 may be coupled to the flange 230, for example, by a mechanical coupler such as a threaded connector (e.g., a screw, bolt, etc.) and/or a non-threaded connector (e.g., a rivet, etc.). The end portion 118 may also be coupled to the flange 230, for example, by a heat-based joining process such as welding, brazing, soldering, etc. In some implementations, the hand rail 116 and the flange 230 are separate components. The hand rail 116 and the flange 230 may also be integrally formed as a unitary body.

The bracket 112 is configured to prevent the flange 230 from moving in the first direction 122 when the first load F₁ is applied to the hand rail 116 in the first direction 122 (e.g., the y-direction). The bracket 112 may also be configured to allow the flange 230 to move in the second direction 124 that is different than the first direction 122 when the second load F₂ is applied to the hand rail 116 in the second direction 124 (e.g., the x-direction). The flange 230 may move from a first position (indicated by solid lines) to a second position (indicated by dotted lines) when the second load F₂ is applied to the hand rail 116. In some implementations, the bracket 112 may be configured to allow the flange 230 to move in the second direction 124 when the second load F₂ is greater than a threshold value. In some implementations, the threshold value may be approximately seven-hundred Newtons (N) or approximately one-hundred fifty pounds of force (Ibf), for example, between five-hundred and seven-hundred fifty N, or between approximately one-hundred ten and one-hundred seventy lbf. The threshold value may also be approximately 2,200 N or approximately five-hundred lbf (for example, 2,000 - 2,400 N, or between approximately four-hundred fifty and five-hundred lbf), or any value between approximately six-hundred fifty and approximately 2,400 N.

As shown in FIGS. 2-3, the flange 230 includes a first portion 232 positioned within the channel 114 and a second portion 234 coupled to the first portion 232. The second portion 234 is also coupled to the hand rail 116 (e.g., via the end portion 118) and extends away from the channel 114. As shown, a length of the channel 114 in the x-direction is longer than a length of the first portion 232 in the x-direction such that the first portion 232 can move along the channel 114 in the x-direction. Though shown in FIG. 3 as having the same length in the x-direction as the first portion 232, the second portion 234 may have a length in the x-direction that is different than that of the first portion 232. In some implementations, the first portion 232 is oriented obliquely (e.g., at a non-zero angle) to the second portion 234. Furthermore, the flange 230 is shown as having a T-shape in FIG. 2, which is shown for example purposes only. The flange 230 may be configured in any geometric shape that provides for the function of the flange 230 described herein, and the channel 114 may be shaped in a complementary shape to the first portion 232 of the flange 230 to provide for the functionality described herein.

In some implementations, the bracket 112 includes a deformable portion 338 configured to resist motion of the flange 230 in the second direction 124 when the second load F₂ is less than the threshold value and allow motion of the flange 230 in the second direction 124 when the second load F₂ is greater than the threshold value. As shown, the deformable portion 338 is positioned between the bracket 112 and the first portion 232. The deformable portion 338 may be any type of structure or device that can prevent relative motion between components until a load exceeds a threshold value. In some embodiments, the deformable portion 338 may operate in a manner that is irreversible. In an example embodiment, the deformable portion 338 may be configured to break when the second load F₂ is greater than the threshold value to allow motion of the flange 230 in the second direction 124. For example, the deformable portion 338 may be a rod positioned between the bracket 112 and the first portion 232, where the rod is configured to deform (e.g., break, bend, etc.) when the load on the rod (e.g., the second load F₂) is greater than a threshold value. In some instances, the deformable portion 338 may include a geometric irregularity (e.g., a notch, a cutout, a dimensional change, etc.), and the deformable portion 338 may be configured to deform at the location of the geometric irregularity. After the deformable portion 338 deforms, the first portion 232 of the flange 230 is free to move along the channel 114 in response to the second load F₂. The deformation of the deformable portion 338 may be irreversible such that the deformable portion 338 may not return to its unloaded state when the load is no longer applied.

The deformable portion 338 may also operate in a manner that is reversible such that the deformable portion 338 may return to its unloaded state when the load is no longer applied. For example, the deformable portion 338 may include a resilient material or structure (e.g., rubber, silicone, a spring, etc.) that is configured to deform under a load that is greater than the threshold value and then return to its original form when the load is removed or otherwise decreased to a value less than the threshold value. As another example, the deformable portion 338 may be a telescoping structure that includes multiple concentric tubes configured to retract within each other under a load that is greater than the threshold value. The deformable portion 338 may also include a bellows structure configured to compress under a load that is greater than the threshold value.

In some implementations, the flange 230 is prevented from moving in the second direction 124when the second load F₂ is less than the threshold value by friction between the flange 230 and the bracket 112. The friction force between the flange 230 and the bracket 112 may correspond to a fit between the bracket 112 and the flange 230 (e.g., a friction fit). The friction force between the flange 230 and the bracket 112 may also correspond to an interaction of a material of the flange 230 and a material of the bracket 112. For example, the flange 230 and or the bracket 112 may include a high-friction coating (e.g., silicone, rubber, etc.) that may prevent the flange 230 from moving when the load in the second direction 124 is less than the threshold value.

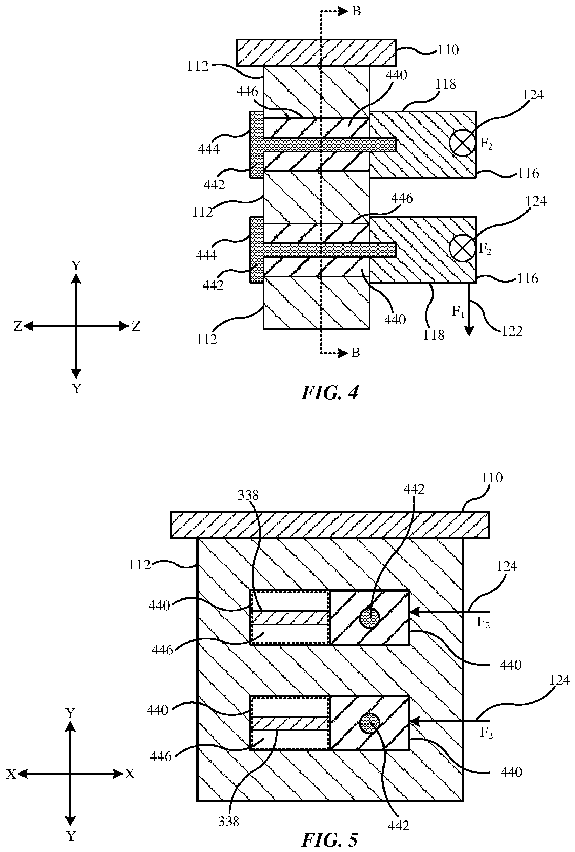

FIGS. 4-5 are illustrations of cross-sections of another embodiment of the bracket 112 of the vehicle 102 of FIG. 1, where FIG. 5 shows a cross-section of the bracket 112 along B-B shown in FIG. 4. As shown in FIG. 4, the bracket 112 includes a channel 446 that extends through the bracket 112 (e.g., in the z-direction) and a flange 440 is secured within the channel 446 on a first side by the hand rail 116 (e.g., via the end portion 118) and on a second side by a head portion 444 of a threaded coupler 442 that connects the hand rail 116 to the flange 440. In some embodiments, there are multiple channels 446 (e.g., two channels 446 as shown in FIGS. 4-5), and there are multiple flanges 440, where each of the flanges 440 is configured to be received within a corresponding one of the channels 446. Furthermore, there may be multiple threaded couplers 442 that secure each of the flanges 440 to the hand rail 116. As shown, the threaded couplers 442 extend through the flanges 440 and into the end portion 118 of the hand rail 116. In some implementations, the flanges 440 are formed integrally with the hand rail 116 such that the end portion 118 includes the flanges 440 as a unitary structure.

The threaded coupler 442 is shown to include a head portion 444. The head portion 444 extends beyond a boundary of the channel 446 and the hand rail 116 extends beyond the boundary of the channel 446. For example, there may be a head portion 444 associated with each of the threaded couplers 442 such that each of the threaded couplers 442 has a head portion 444. Each of the head portions 444 may extend beyond the boundary of the respective channel 446, and the end portion 118 may extend beyond the boundaries of the channels 446 to prevent the flanges 440 from falling out of the channels 446.

Arranged as described, the bracket 112 is configured to prevent the flange 440 from moving in the first direction 122 (e.g., the y-direction) when the first load F₁ is applied to the hand rail 116 in the first direction 122. The bracket 112 is also configured to allow the flange 440 to move in the second direction 124 that is different than the first direction 122 when the second load F₂ is applied to the hand rail 116 in the second direction 124 (e.g., the x-direction). The flange 440 may move from a first position (indicated by solid lines) to a second position (indicated by dotted lines) when the second load F₂ is applied to the hand rail 116. In some implementations, the bracket 112 is configured to allow the flange 440 to move in the x-direction when the second load F₂ is greater than the threshold value, as described above. For example, the deformable portion 338 may be included and positioned between the flange 440 and the bracket 112 and operate as previously described to allow relative motion between the flange 440 and the bracket 112 in the x-direction when the second load F₂ is greater than the threshold value. In some implementations, the deformable portion 338 is not included and relative motion between the flange 440 and the bracket 112 is prevented by a friction force between the flange 440 and the bracket 112 as described above.

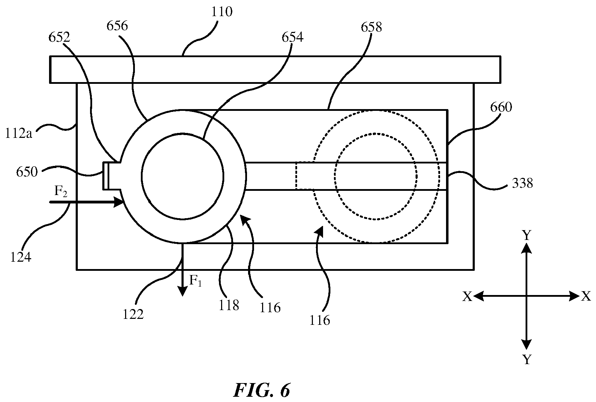

FIG. 6 is an illustration of another embodiment of the bracket 112 of the vehicle 102 of FIG. 1. The bracket 112 is coupled to the structural portion 110 of the vehicle 102 and defines a first geometric feature 650. More specifically, a surface 658 of the bracket 112 defines a channel 660 and the first geometric feature 650. The hand rail 116 includes an outer surface 656 that defines a second geometric feature 652 that is complementary to the first geometric feature 650, and an end portion 118 of the hand rail 116 is configured to fit within the channel 660 and move along the channel 660. In some implementations, the first geometric feature 650 is a recess in the bracket 112 and the second geometric feature 652 is a protrusion sized and configured to fit within the first geometric feature 650. Any other type of geometric feature can be implemented. Examples of other geometric features include slots, cutouts, openings, tabs, extensions, lips, etc. The second geometric feature 652 is shown as being integral with the outer surface 656 such that the second geometric feature 652 and the hand rail 116 are a unitary component. However, in some embodiments the second geometric feature 652 is a separate component sized and configured to fit within a complementary recess defined by the outer surface 656 of the hand rail 116.

In some embodiments, the second geometric feature 652 may be configured to prevent the hand rail 116 from moving in the first direction 122 when the second geometric feature 652 is engaged with the first geometric feature 650 and the first load F₁ is applied to the hand rail 116 in the first direction 122 (e.g., the y-direction). Though shown as a linear load, the first load F₁ may be a rotational (e.g., torsional) load such that the first direction 122 is a rotation of the hand rail 116 relative to the bracket 112. The engagement between the first geometric feature 650 and the second geometric feature 652 also prevents relative rotational movement between the hand rail 116 and the bracket 112. The second geometric feature 652 may also be configured to allow the hand rail 116 to move in the second direction 124 that is different than the first direction 122 when the second load F₂ is applied to the hand rail 116 in the second direction 124 (e.g., the x-direction). In some implementations, the second geometric feature 652 may be configured to disengage from the first geometric feature 650 during application of the second load F₂ to the hand rail 116 in the second direction 124. The hand rail 116 may move from a first position (indicated by solid lines) to a second position (indicated by dotted lines) when the second load F₂ is applied to the hand rail 116.

In some implementations, the hand rail 116 also includes a stiffener 654 sized and configured to fit within the hand rail 116 to provide additional torsional stability to the hand rail 116 when a torsional load is applied to the hand rail 116. The stiffener 654 may be a separate component coupled with the hand rail 116. In some embodiments, the stiffener 654 is integral with the hand rail 116 such that the hand rail 116 and the stiffener 654 are a unitary component.

In some embodiments, the bracket 112 includes the deformable portion 338 that is configured to resist motion of the hand rail 116 in the second direction 124 when the second load F₂ is less than the threshold value and to allow motion of the hand rail 116 in the second direction 124 when the second load F₂ is greater than the threshold value. As described above, the deformable portion 338 may be configured to deform when the second load F₂ is greater than the threshold value to allow motion of the hand rail 116 in the second direction 124. In some implementations, the deformable portion 338 is not included and relative motion between the hand rail 116 and the bracket 112 is prevented by a friction force between the hand rail 116 and the bracket 112 as described above.

In some implementations, the threshold value may be dependent on a size of an occupant in the vehicle 102. For example, the cabin 104 may include a sensor configured to detect a weight or mass of the occupant in the cabin 104. In implementations where the cabin 104 includes a seat, the sensor may be located on or in the seat. The threshold value may increase as the detected weight increases. For example, for an impact at a given speed, relative motion of the hand rail 116 with respect to the bracket 112 may not be needed if the occupant is small (e.g., has a low mass such as between fifteen and forty kilograms, or between approximately thirty and ninety pounds) but it may be needed if the occupant is an adult (e.g., has a higher mass such as greater than forty kilograms or ninety pounds).

As described above, one aspect of the present technology is the gathering and use of data available from various sources for use during operation of the support assembly 100. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores occupant related information that allows adjustment of operation of the support assembly 100. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for determining operation of the support assembly 100, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, information regarding a size of an occupant may be determined each time the hand rail 116 is used, such as by obtaining the size information in real time, and without subsequently storing the information or associating with the particular user.

## Claims

1. A support assembly for a vehicle, comprising:
a bracket coupled to a structural portion of the vehicle and defining a channel; and
a hand rail including an end portion configured to interface with the channel,
wherein the bracket is configured to prevent relative motion between the end portion of the hand rail and the bracket when a first load is applied to the hand rail in a first direction, and the bracket is configured to allow relative motion between the end portion of the hand rail and the bracket when a second load is applied to the hand rail in a second direction that is different than the first direction.

2. The support assembly of claim 1, wherein the second direction is oblique to the first direction.

3. The support assembly of claim 2, wherein the first direction is oriented obliquely to a direction of travel of the vehicle.

4. The support assembly of claim 1, wherein the bracket is configured to allow the end portion to move between approximately ten millimeters and approximately twenty millimeters in the second direction when the second load is applied to the hand rail in the second direction.

5. The support assembly of claim 1, wherein the bracket is fixed to the structural portion and the end portion is configured to move relative to the bracket.

6. The support assembly of claim 1, wherein the end portion is fixed to the bracket and the bracket is configured to move relative to the structural portion.

7. The support assembly of claim 1, wherein a flange is at least partially positioned in the channel and is configured to move along the channel,
wherein the end portion is coupled to the flange and is configured to move with the flange as the flange moves along the channel.

8. The support assembly of claim 7, wherein the bracket is configured to prevent the flange from moving in the first direction when the first load is applied to the hand rail in the first direction, and the bracket is configured to allow the flange to move in the second direction that when the second load is applied to the hand rail in the second direction.

9. The support assembly of claim 8, wherein the second load is greater than a threshold value.

10. The support assembly of claim 9, wherein the bracket includes a deformable portion configured to resist motion of the flange in the second direction when the second load is less than the threshold value and allow motion of the flange in the second direction when the second load is greater than the threshold value.

11. The support assembly of claim 10, wherein the deformable portion is configured to break when the second load is greater than the threshold value to allow motion of the flange in the second direction.

12. The support assembly of claim 7, wherein the flange includes a first portion positioned within the channel and a second portion coupled to the first portion, wherein the second portion is coupled to the hand rail and extends away from the channel.

13. The support assembly of claim 12, wherein the first portion is oriented obliquely to the second portion.

14. The support assembly of claim 7, wherein the channel extends through the bracket and the flange is secured within the channel on a first side by the hand rail and on a second side by a head portion of a threaded coupler that connects the hand rail to the flange.

15. The support assembly of claim 14, wherein the head portion extends beyond a boundary of the channel and the hand rail extends beyond the boundary of the channel.
